# EUROPEAN PATENT APPLICATION

(11) **EP 2 088 759 A1**
(43) Date of publication of application: **12.08.2009**
(21) Application number: 07816899.4
(22) Date of filing: 29.11.2007
(51) Int. Cl.: H04M 11/00

(54) **A METHOD, TELEPHONE SYSTEM AND TELEPHONE TERMINAL FOR CALLING SESSION**

(30) Priority: 06.12.2006 CN 200610124094
(71) Applicant: Huawei Technologies Co., Ltd., Longgang District, Shenzhen Guangdong 518129 (CN)
(72) Inventor: YANG, Bo, Shenzhen Guangdong 518129 (CN); XIE, Shunfang, Shenzhen Guangdong 518129 (CN)
(74) Representative: Körber, Martin Hans
(86) International application number: PCT/CN2007/003383
(87) International publication number: WO 2008/067722

(57) **Abstract**

A method for call session is disclosed, including: receiving a call session operation signal from a first IP telephone terminal; detecting based on the call session operation signal whether a second IP telephone terminal using the same telephone number as the first IP telephone terminal is communicating with a third IP telephone terminal; and controlling the first IP telephone terminal and the second IP telephone terminal to exchange information with the third IP telephone terminal when detecting that the second IP telephone terminal is communicating with the third IP telephone terminal. A definition is added for implementation of the IP telephone terminal combination function in an IP telephone system so that IP telephone terminals can use the same telephone number to join or quit a call session for the combined terminals, and accordingly the user satisfaction may be enhanced. Also disclosed are an IP telephone system and an IP telephone terminal.

## Description

### FIELD OF THE INVENTION

The invention relates to the field of communications, and more particularly, to a method, system and terminal for call session.

### BACKGROUND

In the field of communications, the concept of terminal combination function mainly refers to a case in which two or more telephone terminals are using the same telephone number and one of them may join or quit a call session of the terminal combination by transmitting a signaling or the like. The concept may also rerfer to a case in which response requests are transmitted or prevented from being transmitted to all members of the terminal combination system.

Currently, the terminal combination function for analog telephone terminals has been implemented over the Public Switch Telephone Network (PSTN). Circuit switching is employed among analog telephone terminals over an analog telephone system, and hence a dedicated connection circuit is formed. Accordingly, when one analog telephone terminal in the terminal combination system is communicating, another analog telephone terminal in the terminal combination may join the communication without connection via any device and may hence share the above connection circuit. Thus, the effect of joining the call session as provided in the terminal combination function may be achieved. When quitting the call session, an analog telephone terminal may directly breaks the connection with the above connection circuit without the control of any device, and thus the effect of quitting the call session may be achieved. As for the functions of transmitting or preventing from transmitting response requests to all members in the terminal combination system, the flow definitions are provided over the analog telephone system.

But in the current Internet Protocol (IP) based telephone systems, there is no definition of the terminal combination function for IP telephone terminals because IP telephone terminals have their own unique IP identifications, just like other IP network devices and information exchange between IP telephone terminals is performed mainly by delivery of packets over the IP network. In this manner, the implementation flow for the terminal combination function in the analog telephone terminal system cannot be defined in the IP network.

As described above, the disadvantage of the prior art lies in that the implementation flow of the terminal combination function is not defined in the current IP telephone systems, and accordingly IP telephone terminals cannot use the same telephone number simultaneously. Thus, an IP telephone terminal cannot join or quit a call session of the terminal combination, which reduces the user satisfaction.

### SUMMARY

An embodiment of the present invention provides a method and a telephone system for call session so that the terminal combination function of telephone terminals may be achieved based on the telephone system.

To achieve the above object, an embodiment of the invention provides a method for call session, including:
receiving a call session operation signal from a first IP telephone terminal;
detecting, based on the call session operation signal, whether a second IP telephone terminal using the same telephone number as the first IP telephone terminal is communicating with a third IP telephone terminal; and
controlling the first IP telephone terminal and the second IP telephone terminal to exchange information with the third IP telephone terminal when detecting that the second IP telephone terminal is communicating with the third IP telephone terminal.

Accordingly, an embodiment of the invention also provides a telephone system, including a call session control device for controlling a call session between IP telephone terminals. The call session control device is adapted to receive a call session operation signal from a first IP telephone terminal, to detect based on the call session operation signal whether a second IP telephone terminal using the same telephone number as the first IP telephone terminal is communicating with a third IP telephone terminal, and to control the first IP telephone terminal and the second IP telephone terminal to exchange information with the third IP telephone terminal when detecting that the second IP telephone terminal is communicating with the third IP telephone terminal.

An embodiment of the invention also provides a telephone terminal, including:
an acquisition unit, adapted to receive a call session operation signal from a second IP telephone terminal using the same telephone number as the terminal; and
a detection unit, adapted to detect based on the call session operation signal whether the terminal is communicating with a third IP telephone terminal, and to output control information for controlling exchange of a set of call session information for the terminal and the second IP telephone terminal and call session information for the third IP telephone terminal.

According to embodiments of the invention, the fllowing advantageous effects may be achieved. The call session scheme provided in the embodiments of the invention may implement the terminal combination function of telephone terminals in the telephone system, so that the telephone terminals may use the same telephone number to join or quit the call session of the terminal combination, and accordingly, the user satisfaction may be improved.

### BRIEF DESCRIPTION OF THE DRAWINGS

FIG.1 is the main flow chart showing a method for call session according to an embodiment of the present invention;

FIG.2 is a diagram schematically showing a first embodiment of the method for call session according to a first embodment of the present invention;

FIG.3 is a diagram schematically showing a second embodiment of the method for call session according to a second embodment of the present invention;

FIG.4 is a diagram showing the main configuration of an IP telephone system according to an embodiment of the invention;

FIG.5 is a diagram schematically showing a first embodiment of the IP telephone system according to a first embodment of the present invention;

FIG.6 is a diagram schematically showing a second embodiment of the IP telephone system according to a second embodment of the present invention;

FIG.7 is a diagram schematically showing a third embodiment of the IP telephone system according to a third embodment of the present invention;

FIG.8 is a diagram showing the main configuration of an IP telephone terminal according to an embodiment of the present invention; and

FIG.9 is a diagram schematically showing a first embodiment of the IP telephone terminal according to a first embodment of the present invention.

### DETAILED DESCRIPTION

In embodiments of the invention, a method, system and apparatus for call session is provided over the telephone system, which is adapted to control a first IP telephone terminal to join or quit a call session between a second IP telephone terminal and a third IP telephone terminal, so as to implement the terminal combination function of IP telephone terminals in a simple and feasible fashion.

It is to be noted that the technical solution of the invention may be implemented in an IP Multimedia Subsystem (IMS), a Next Generation Network (NGN) or a teleconference system, and may be applied to an audio IP telephone, or a video IP telephone, or an IP telephone supporting both audio and video functions. In embodiments of the invention, two or more IP telephone terminals may use the same telephone number. Descriptions will be made below to the embodiments of the invention with reference to accompanying drawings.

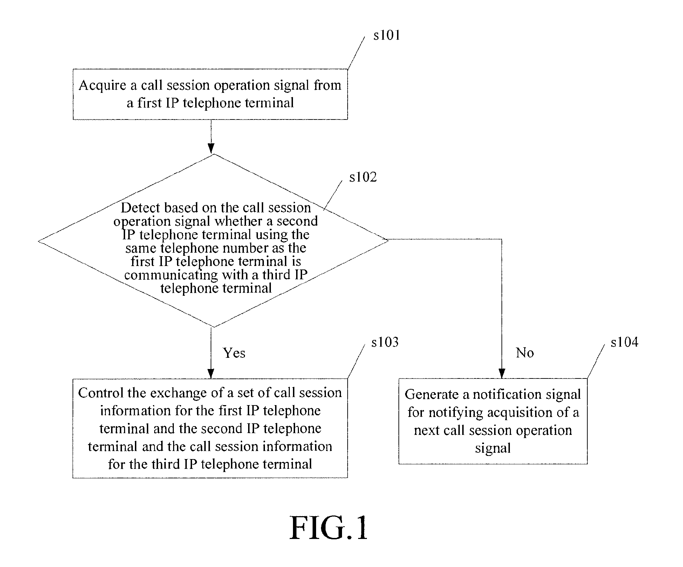

FIG.1 shows the main flow chart of a method for call session according to embodiments of the invention. The following steps are involved.

In step s101, a call session operation signal is acquired from a first IP telephone terminal.

In step s102, a detection is made based on the call session operation signal whether a second IP telephone terminal using the same telephone number as the first IP telephone terminal is communicating with a third IP telephone terminal.

In step s103, when the detection result is positive, exchange of a set of call session information for the first IP telephone terminal and the second IP telephone terminal and call session information for the third IP telephone terminal is initiated.

In step s104, when the detection result is negative, a notification signal is generated for notifying acquisition of a next call session operation signal.

The call session operation signal may be an off-hook signal, an on-hook signal, or a key pressing signal having the function of indicating establishment/clearance of a call connection. As the signal differs, the above main flow may include two scenarios.

First, when a call session initiation signal (for example, an off-hook signal) is acquired, the detection step s102 is triggered. When detecting that the second IP telephone terminal having the same telephone number as the first IP telephone terminal is communicating with the third IP telephone terminal, exchange of a set of call session information for the first IP telephone terminal and the second IP telephone terminal and call session information for the third IP telephone terminal may be initiated. When the above detection result indicates that the second IP telephone terminal is idle, the call session control device will enter into a call session waiting state, transmit a dial waiting tone to the first IP telephone terminal, and wait for the first IP telephone terminal to dial a number.

Second, when a call session termination signal (for example, an on-hook signal) is acquired, the detection step s102 is also triggered. When detecting that the second IP telephone terminal having the same telephone number as the first IP telephone terminal is communicating with the third IP telephone terminal, exchange of a set of call session information for the first IP telephone terminal and the second IP telephone terminal and call session information for the third IP telephone terminal may be terminated. When the above detection result indicates that the second IP telephone terminal is idle, the call session control device will enter into a call session waiting state, terminate the connection between the first IP telephone terminal and the third IP telephone terminal, and wait for the next call session operation.

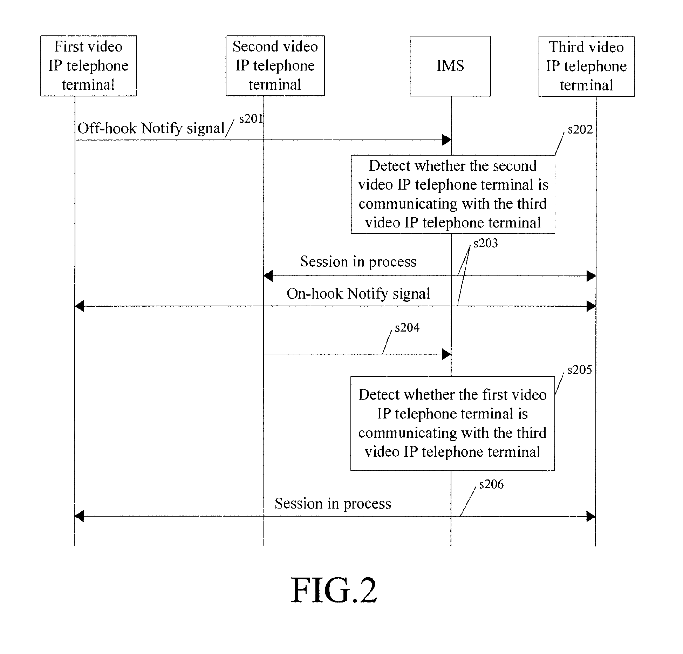

FIG.2 is a diagram schematically showing a first embodiment of the method for call session according to the invention. In this embodiment, an IMS system acts as a central office device, and a video IP telephone terminal acts as a terminal device. Before this point, various video IP telephone terminals that have the same phone number and are compliant with RFC3261 and RFC2543 have been registered with the IMS system, which records information about the terminal combination having the same telephone number. In the figure, the first video IP telephone terminal and the second video IP telephone terminal are terminals using the same telephone number. Alternatively, the IMS system may subscribe to a Notify signaling indicating its call session initiation/termination from each video IP telephone terminal via a SUBSCRIBE signaling. Referring to the figure, the method mainly includes the following steps.

In step s201, the first video IP telephone terminal transmits an off-hook Notify signal to the IMS system. Alternatively, the user may trigger the generation of the Notify signal via the keypad or the like.

In step s202, upon receipt of the off-hook Notify signal, the IMS identifies the telephone number used by the first video IP telephone terminal, and detects the call session state of the second video IP telephone terminal using the same telephone number based on the initially registered terminal combination information. In other words, a detection is made as to whether the second video IP telephone terminal is communicating with the third video IP telephone terminal. When the detection result is negative, a notification signal is generated for notifying acquisition of the next call session operation signal. Information about the combined terminals may be in form of a database corresponding to telephone numbers and video IP telephone terminal information. The registration information may include the IP address information of the IP telephone terminals, the identification information of the IP telephone terminals, the call session restriction information, etc. It may be used to establish a call session connection by looking up the IP address information, or may be used to detect whether the connection path of an IP telephone terminal is busy/idle via the IP telephone terminal identification information, or may be used to restrict the terminal combination processing via the call session restriction information.

In step s203, when the detection result in step s202 indicates that the second video IP telephone terminal is communicating with the third video IP telephone terminal, the first video IP telephone terminal is controlled to join the call session between the second video IP telephone terminal and the third video IP telephone terminal. In other words, exchange of a set of call session information for the first video IP telephone terminal and the second video IP telephone terminal and call session information for the third video IP telephone terminal may be initiated. Specifically, the following steps are involved.

In step A, the call session connections between the first video IP telephone terminal, the second video IP telephone terminal, and the third video IP telephone terminal may be configured. The configuration process may be achieved by configuring the routing information of packets for each IP telephone terminal, for example, the source IP address, the relay IP address, the destination IP address, etc. In operation of a non pure IP network, the call session connection is established by still using the virtual circuit establishment fashion.

In step B, the call session information transmitted from the first video IP telephone terminal, the second video IP telephone terminal and the third video IP telephone terminal may be acquired over the call session connections.

In step C, the call session information for the first video IP telephone terminal and the call session information for the second video IP telephone terminal may be mixed. For audio information, a voice mixing operation may be performed on the audio information transmitted from the first video IP telephone terminal and the second video IP telephone terminal, so as to generate voice-mixed data information. For video information, a multi-picture operation may be performed on the video information transmitted from the first video IP telephone terminal and the second video IP telephone terminal, so as to generate multi-picture data information. Then, a set of call session information generated by the mixing operation, such as the voice-mixed data information or the multi-picture data information, is transmitted to the third video IP telephone terminal via the call session connections. The audio and video data information transmitted by the third video IP telephone terminal may be transmitted to the first video IP telephone terminal and the second video IP telephone terminal respectively over the call session connections. It is to be noted that the third video IP telephone terminal may be configured with a functional module for separating the voice-mixed and multi-picture data information so that it can operate well. For the network transmission of the audio and video information, the following processes are involved.

In process C1, when the call session information/the set of call session information is audio data information, the audio information is subject to various processing, such as analog to digital conversion, packing and grouping, route assignment, storing and forwarding, digital to analog conversion, etc. There may be the following cases.

In situation 1, analog to digital conversion. First, an IP telephone terminal should perform an analog to digital conversion on the analog audio signal. In other words, 8-bit or 6-bit quantization is performed on the analog speech signal before sending it to a buffer memory. The size of the buffer memory may be selected according to the delay and coding requirements. Many low bit rate coders perform coding in units of frames, which is typically 10 to 30 ms. On the other hand, digitization may be achieved by using various speech coding standards, such as G.711, G.721, G.723.1, G.728 or G.729. The speech coding for the source IP address and the destination IP address uses the same coding and compression algorithm, so that the destination IP telephone terminal may recover the analog speech signal from the incoming digital signal.

In situation 2, packing and grouping. After the analog signal is digitally coded, the speech packet is compressed with a particular frame length. For example, most coders have their particular frame lengths. If a coder uses a 15ms frame, a 60ms speech packet is divided into four frames which are coded sequentially. After coding, four compressed frames are synthesized into a compressed speech packet, which is sent to a network processor. The network processor may add a header, a time stamp or the like for the speech, and then send it to another endpoint through network transfer. The IP network is different from the circuit switching network, that is, there is no need to establish any circuit connection. Thus, data needs to be placed in a variable length datagram or packet. Then, each datagram is appended with its addressing and control information, and is transmitted over the network.

In situation 3, route assignment. Upon receipt of a speech packet, the network input side sends it to the network output side within a certain time period t, where t may vary within a certain range and thus reflect the jitter in the network transfer. The network node checks the addressing information accompanying each IP data, and forwards the compressed packet to a destination station on the transmission path according to the addressing information. In this way, the transfer is accomplished.

In situation 4, storage and exchange. The network receiving side may provide a variable length buffer as needed, which is adapted to adjust the jitter caused by the network. The destination IP telephone terminal receives an IP speech packet, and the decoder decompresses the speech packet to generate a new speech packet, specifically in units of frames. In processing the datagram, the addressing and control information is removed. The original data is obtained, and then provided to the decoder.

In situation 5, digital to analog conversion. The playback driver fetches the speech samples in the buffer and sends them to an audio card device, which outputs them via a speaker at a predefined frequency.

On the other hand, for an IP telephone system having an audio nature, the speech belongs to the real-time service and thus has strict requirements in timing, delay or the like, as well as a higher requirement for the signaling technique, coding technique and network transfer technique in the IP telephone system. In implementation, the following ways may be involved.

Mode K1: signaling technique. The signaling technique is used to guarantee the smooth implementation of the call session in the IP telephone system and its voice quality. Among the widely accepted speech IP control signaling architectures, the ITU-T H.323 series is a set of protocols relating to multimedia communications, including H.320 for ISDN, H.321 for wideband ISDN, and H.324 for PSTN terminals. H.323 provides interoperability among provision devices, among higher-level applications and among providers, independent of the network architecture, the operating system and the hardware platform. The multi-point function, the multi-casting function and the bandwidth management function are supported, and conferences between nodes having different functions and conferences between different networks are supported.

Mode K2: coding technique. The speech compression coding technique is an important element of the IP telephone technique. Currently, the main speech coding techniques include G.729, G.723, etc., as defined by ITU-T. Among them, G.729 may compress the sampled 64kbit/s speech to 8kbit/s almost without distorted quality. In packet switching networks, the service quality cannot be guaranteed very well, and thus the speech coding should be flexible, that is, the coding rate and the coding scale should be variable and adaptable. G.723.1 uses the 5.3/6.3 kbit/s double rate speech coding, and its speech quality is good. It is a standardized minimal rate speech coding algorithm. Also, silence detection technique and echo cancellation technique are important to the speech IP telephone system.

K3, network transfer technique, mainly including Transfer Control Protocol (TCP), and User Datagram Protocol (UDP). Also included are gateway interconnection technique, routing technique, network management technique, secure authorization technique, billing technique, etc.

In process C2, when the call session information/ the set of call session information is a video signal, conventional techniques such as digital video compression, digital video transfer or the like, may be used, and the description is omitted here.

In step s204, the second video IP telephone terminal transmits an on-hook Notify signal to the IMS. Alternatively, the user may trigger the generation of the Notify signal via the keypad.

In step s205, upon receipt of the on-hook Notify signal, the IMS detects the call session state of the first video IP telephone terminal having the same number as the second video IP telephone terminal, that is, detects whether the first video IP telephone terminal is still communicating with the third video IP telephone terminal.

In step s206, when the detection result of the step s205 indicates that the first video IP telephone terminal is still communicating with the third video IP telephone terminal, the call session connections between the second video IP telephone terminal and the first video IP telephone terminal and between the second video IP telephone terminal and the third video IP telephone terminal are released, but the call session connection between the first video IP telephone terminal and the third video IP telephone terminal is still maintained. In this way, the IMS may maintain a normal call session between the first video IP telephone terminal and the third video IP telephone terminal.

Based on the method for call session as shown in FIG.2, the following two points should be clarified.

S1: When the on-hook Notify signal received by the IMS is originated from the third video IP telephone terminal, the IMS transmits signals for terminating the call session to the first video IP telephone terminal and the second video IP telephone terminal respectively. The call session connections between the third video IP telephone terminal and the first video IP telephone terminal and between the third video IP telephone terminal and the second video IP telephone terminal are released.

S2: When the detection result of the step s205 indicates that the first video IP telephone terminal is no longer communicating with the third video IP telephone terminal, the IMS transmits signals for terminating the call session to the first video IP telephone terminal and the third video IP telephone terminal respectively. The call session connection between the first video IP telephone terminal and the third video IP telephone terminal is then released.

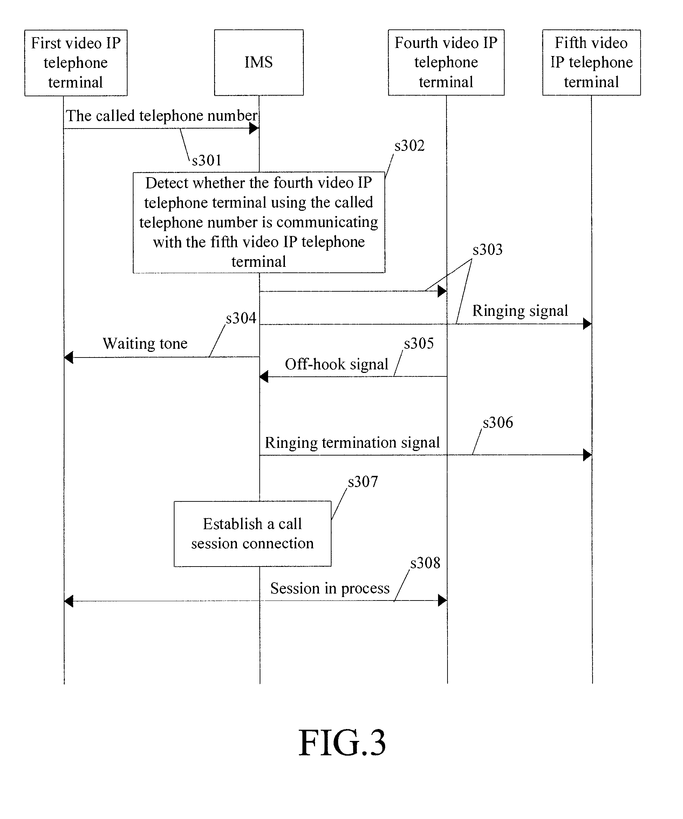

The above description is made to a case in which the system performs a terminal combination process when the IMS receives a call session initiation or termination signal. Descriptions will be made below to a case in which the system performs a terminal combination process when the IMS receives the called telephone number information, with reference to a second embodiment of the call session method shown in FIG.3.

FIG.3 is a diagram schematically showing a second embodiment of the method for call session according to the invention. This embodiment is illustrated on the basis of the embodiment of FIG.2. When it is detected in step s202 that the second video IP telephone terminal is in the call session idle state, step s301 and its subsequent steps are started. Before this point, various video IP telephone terminals having the same phone number and compliant with protocols such as RFC3261 and RFC2543 have been registered with the IMS system, which records information about the terminals using the same phone number. In the figure, the fourth video IP telephone terminal and the fifth video IP telephone terminal use the same called telephone number. Alternatively, the IMS system may subscribe to a Notify signaling for indicating its call session initiation/termination from each video IP telephone terminal. Referring to the figure, the method mainly includes the following steps.

In step s301, the first video IP telephone terminal transmits the called telephone number to the IMS. In other words, after the IMS receives an off-hook Notify signal transmitted from the first video IP telephone terminal, when the IMS detects that the second video IP telephone terminal having the same phone number as the first video IP telephone terminal is in the call session idle state, the IMS transmits a called number dialed waiting tone.

In step s302, the IMS detects whether any one of the fourth video IP telephone terminal and the fifth video IP telephone terminal using the same called telephone number is in the communication state.

In step s303, when the detection result of step s302 indicates that the fourth video IP telephone terminal and the fifth video IP telephone terminal are both in the idle state, the IMS transmits ringing signals to the fourth video IP telephone terminal and the fifth video IP telephone terminal, to prompt them to respond to the call session request from the first video IP telephone terminal.

In step s304, while executing step s303, the IMS transmits a call session waiting tone to the first video IP telephone terminal, to prompt it to wait for a call session response from the called party.

In step s305, the IMS receives an off-hook signal from the fourth video IP telephone terminal.

In step s306, the IMS terminates the ringing to the fifth video IP telephone terminal.

In step s307, while executing step s306, the IMS establishes a call session connection between the first video IP telephone terminal and the fourth video IP telephone terminal.

In step s308, the IMS controls the call session between the first video IP telephone terminal and the fourth video IP telephone terminal. Afterwards, if any terminal using the same phone number joins or quits the call, a process may be conducted similar to that shown in FIG.2.

It is to be noted that the above video IP telephone terminals using the same called telephone number are not limited to the fourth video IP telephone terminal and the fifth video IP telephone terminal. More terminals using the called telephone number may be included.

Descriptions will be given to an IP telephone system according to embodiments of the invention with reference to the accompanying drawings.

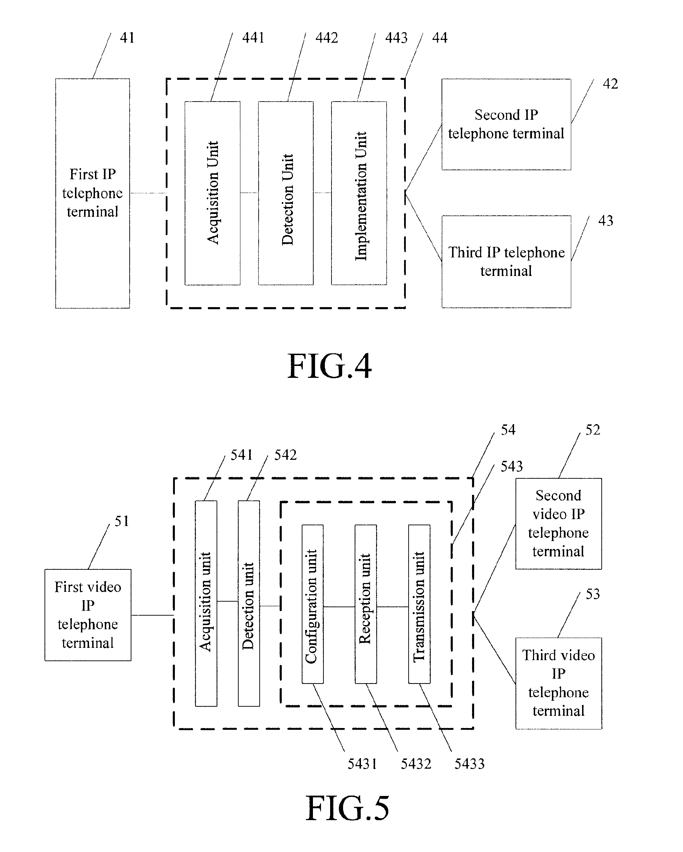

FIG.4 is a diagram showing the main configuration of an IP telephone system according to an embodiment of the invention. As illustrated, the configuration mainly includes a first IP telephone terminal 41, a second IP telephone terminal 42 using the same telephone number as the first IP telephone terminal 41, a third IP telephone terminal 43, and a call session control device 44. The call session control device 44 may include an acquisition unit 441, a detection unit 442, and an implementation unit 443. The connections between the units and their respective functions are described as follows.

The first IP telephone terminal 41, the second IP telephone terminal 42, and the third IP telephone terminal 43 are all coupled to the call session control device 44. The acquisition unit 441 is coupled to the detection unit 442. The detection unit 442 is coupled to the implementation unit 443.

The acquisition unit 441 is adapted to acquire a call session operation signal from the first IP telephone terminal 41. The call session operation signal may be a call session initiation/termination signal.

The detection unit 442 is adapted to detect based on the call session initiation/termination signal whether the second IP telephone terminal 42 using the same telephone number as the first IP telephone terminal 41 is communicating with the third IP telephone terminal 43. If yes, control information is outputted for initiating or terminating the exchange of a set of call session information for the first IP telephone terminal 41 and the second IP telephone terminal 42 and the call session information for the third IP telephone terminal 43; otherwise, a notification signal is generated for notifying acquisition of a next call session operation signal.

The implementation unit 443 is adapted to initiate or terminate the exchange of a set of call session information for the first IP telephone terminal 41 and the second IP telephone terminal 42 and the call session information for the third IP telephone terminal 43 based on the control information.

The call session operation signal may be an off-hook signal, an on-hook signal or a key dialing signal for indicating establishment/clearance of a call connection. As the signal differs, the functions of the above units may include two scenarios.

First, when the acquisition unit 441 acquires a call session initiation signal (for example, an off-hook signal), the detection unit 442 is triggered to operate. When the detection unit 442 detects that the second IP telephone terminal 42 using the same telephone number as the first IP telephone terminal 41 is communicating with the third IP telephone terminal 43, control information is transmitted to the implementation unit 443, to initiate exchange of a set of call session information for the first IP telephone terminal 41 and the second IP telephone terminal 42 and the call session information for the third IP telephone terminal 43. The implementation unit 443 then performs the actions indicated by the control information. When the detection result indicates that the second IP telephone terminal 42 is idle, a notification signal is generated for notifying acquisition of the next call session operation signal.

Second, when the acquisition unit 441 acquires a call session termination signal (for example, an on-hook signal), the detection unit 442 is also triggered to operate. When the detection unit 442 detects that the second IP telephone terminal 42 using the same telephone number as the first IP telephone terminal 41 is communicating with the third IP telephone terminal 43, control information is transmitted to the implementation unit 443, to terminate exchange of a set of call session information for the first IP telephone terminal 41 and the second IP telephone terminal 42 and the call session information for the third IP telephone terminal 43. The implementation unit 443 performs the actions indicated by the control information. When the detection result indicates that the second IP telephone terminal 42 is idle, a notification signal is generated for notifying acquisition of the next call session operation signal.

FIG.5 is a diagram schematically showing a first embodiment of the IP telephone system according to the present invention. The description is made mainly in the context of the function for video telephone terminals having the same phone number to join a call session. Referring to the figure, the IP telephone system mainly includes an IMS 54 for call session control, a first video IP telephone terminal 51, a second video IP telephone terminal 52 registered with the IMS 54 and using the same telephone number as the first video IP telephone terminal 51, and a third video IP telephone terminal 53. The IMS 54 includes an acquisition unit 541, a detection unit 542, and an implementation unit 543. The implementation unit 543 further includes a configuration unit 5431, a reception unit 5432, and a transmission unit 5433. The connections between the various units and their respective functions are described as follows.

The first video IP telephone terminal 51, the second video IP telephone terminal 52, and the third video IP telephone terminal 53 are all coupled to the IMS 54. Both the acquisition unit 541 and the implementation unit 543 are coupled to the detection unit 542. The configuration unit 5431 is coupled to the reception unit 5432. The reception unit 5432 is coupled to the transmission unit 5433.

Before this point, various video IP telephone terminals having the same phone number and compliant with RFC3261 and RFC2543 have been registered with the IMS system. The IMS 54 records information about the terminals having the same telephone number. In the figure, the first video IP telephone terminal 51 and the second video IP telephone terminal 52 are terminals using the same telephone number. Alternatively, the IMS system may subscribe to a Notify signaling indicating its call session initiation/termination via a SUBSCRIBE signaling from each video IP telephone terminal.

The acquisition unit 541 is adapted to acquire an off-hook Notify signal transmitted from the first video IP telephone terminal 51. The off-hook Notify signal may be a call session connection request from the first video IP telephone terminal 51.

The detection unit 542 is adapted to identify the telephone number used by the first video IP telephone terminal 51 based on the off-hook Notify signal, and to detect the call session state of the second video IP telephone terminal 52 using the same telephone number based on the initially registered terminal combination information. In other words, a detection is made as to whether the second video IP telephone terminal 52 is communicating with the third video IP telephone terminal 53. If the detection result is negative, a notification signal is generated for notifying acquisition of a next call session operation signal. The terminal combination information may include the IP address information of the IP telephone terminals, the identification information of the IP telephone terminals, the call session restriction information, etc. It may be used to establish a call session connection by querying the IP address information, may also be used to detect whether the connection path of an IP telephone terminal is occupied/idle via the IP telephone terminal identification information, and may also be used to restrict the terminal combination processing via the call session restriction information, etc.

The implementation unit 543 is adapted to control addition of the first video IP telephone terminal 51 into the call session between the second video IP telephone terminal 52 and the third video IP telephone terminal 53 when the detection result of the detection unit 542 indicates that the second video IP telephone terminal 52 is communicating with the third video IP telephone terminal 53. In other words, the exchange of a set of call session information for the first video IP telephone terminal 51 and the second video IP telephone terminal 52 and the call session information for the third video IP telephone terminal 53 is initiated. Specifically, the implementation unit 543 includes a configuration unit 5431, a reception unit 5432, and a transmission unit 5433.

The configuration unit 5431 is adapted to configure the call session connections between the first video IP telephone terminal 51, the second video IP telephone terminal 52 and the third video IP telephone terminal 53. The configuration process may be achieved by configuring the routing information of packets for each IP telephone terminal, for example, the source IP address, the relaying IP address, the destination IP address, etc. In operation of a non pure IP network, a call session connection is established still based on a virtual circuit setup fashion.

The reception unit 5432 is adapted to obtain the call session information transmitted from the first video IP telephone terminal 51, the second video IP telephone terminal 52 and the third video IP telephone terminal 53 over the call session connections configured by the configuration unit 5431.

The transmission unit 5433 is adapted to perform a voice mixing operation on the call session information for the first video IP telephone terminal 51 and the call session information for the second video IP telephone terminal 52. For audio information, a voice mixing operation may be performed on the audio information transmitted from the first video IP telephone terminal 51 and the audio information transmitted from the second video IP telephone terminal 52, to generate voice-mixed data information. For video information, a multi-picture operation may be performed on the video information transmitted from the first video IP telephone terminal 51 and the video information transmitted from the second video IP telephone terminal 52, to generate multi-picture data information. Afterwards, a set of call session information generated by the above mixing process, such as the voice-mixed data information or the multi-picture data information, may be transmitted to the third video IP telephone terminal 53 over the call session connections. The audio or video data information transmitted from the third video IP telephone terminal 53 may be transmitted to the first video IP telephone terminal 51 and the second video IP telephone terminal 52 respectively over the call session connections. It is to be noted that the third video IP telephone terminal 53 may be provided with a functional module for segmenting the voice-mixed and multi-picture data information. For the processing on the audio and video information, please refer to the description made in conjunction with FIG.2, and no repetition is made here.

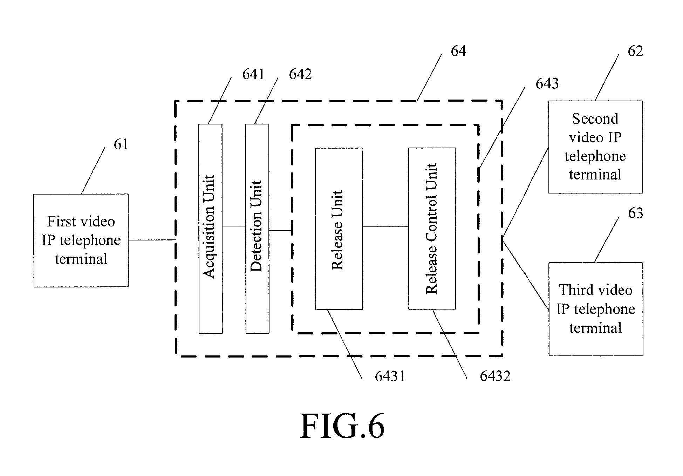

FIG.6 is a diagram schematically showing a second embodiment of the IP telephone system according to the present invention. A function is described mainly for a video telephone terminal in the terminal combination to quit a call session. Referring to the figure, the IP telephone system mainly includes an IMS 64 for call session control, a first video IP telephone terminal 61, a second video IP telephone terminal 62 registered with the IMS 64 and having the same telephone number as the first video IP telephone terminal 61, and a third video IP telephone terminal 63. The IMS 64 includes an acquisition unit 641, a detection unit 642, and an implementation unit 643. The implementation unit 643 includes a release unit 6431 and a release control unit 6432. The connections between the units and their functions are described as follows.

The first video IP telephone terminal 61, the second video IP telephone terminal 62 and the third video IP telephone terminal are all coupled to the IMS 64. Both the acquisition unit 641 and the implementation unit 643 are coupled to the detection unit. The release unit 6431 is coupled to the release control unit 6432.

The acquisition unit 641 may acquire an on-hook Notify signal transmitted from the second video IP telephone terminal 62, the on-hook Notify signal indicating that the second video IP telephone terminal 62 initiates a call session termination request.

Based on the on-hook Notify signal acquired by the acquisition unit 641, the detection unit 642 detects the call session state of the first video IP telephone terminal 61 having the same phone number as the second video IP telephone terminal 62. In other words, a detection is made as to whether the first video IP telephone terminal 61 is communicating with the third video IP telephone terminal 63. If the detection result is negative, a notification signal is generated for notifying acquisition of the next call session operation signal.

The release unit 6431 in the implementation unit 643 is adapted to release the call session connection between the second video IP telephone terminal 62 and the third video IP telephone terminal 63 and to still maintain the call session connection between the first video IP telephone terminal 61 and the third video IP telephone terminal 63 when the detection result of the detection unit 642 indicates that the first video IP telephone terminal 61 and the third video IP telephone terminal 63 are in the communication state. In this way, the IMS controls the first video IP telephone terminal 61 to maintain a normal call session with the third video IP telephone terminal 63. The release control unit 6432 is adapted to control the operation of the release unit 6431.

There are two points to be clarified regarding the IP telephone system of FIG.6.

P1: When an on-hook Notify signal received by the acquisition unit 641 is originated from the third video IP telephone terminal 63, the IMS 64 transmits call session termination signals to the first video IP telephone terminal 61 and the second video IP telephone terminal 62 respectively, and releases the call session connections between the third video IP telephone terminal 63 and the first video IP telephone terminal 61 and between the third video IP telephone terminal 63 and the second video IP telephone terminal 62.

P2: When the detection result of the detection unit 642 indicates that the second video IP telephone terminal 62 is no longer communicating with the third video IP telephone terminal 63, the IMS 64 transmits call session termination signals to the first video IP telephone terminal 61 and the third video IP telephone terminal 63 respectively, and releases the call session connection between the first video IP telephone terminal 61 and the third video IP telephone terminal 63.

The above description referring to FIG.5 and FIG.6 is made to a case of terminal combination process in which the IMS receives a call session initiation or termination signal. With reference to the second embodiment of the call session method in FIG.3, description is made below to a case in which the IMS receives the called telephone number information.

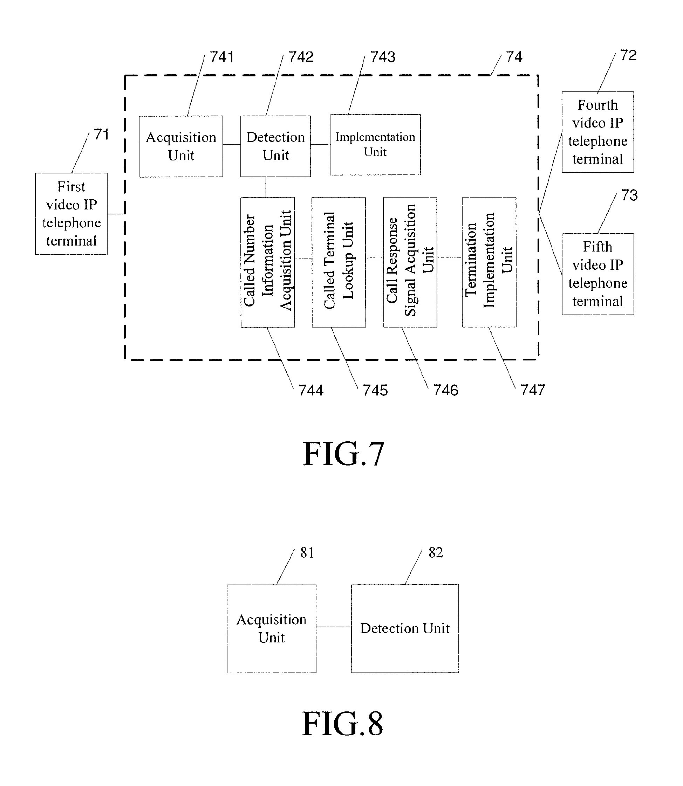

FIG.7 is a diagram schematically showing a third embodiment of the IP telephone system according to the present invention. As illustrated, the IP telephone system mainly includes an IMS 74 for call session control, a first video IP telephone terminal 71, a fourth video IP telephone terminal 72, and a fifth video IP telephone terminal 73 registered with the IMS 74 and having the same telephone number as the fourth video IP telephone terminal 72. The IMS 74 includes an acquisition unit 741, a detection unit 742, an implementation unit 743, a called number information acquisition unit 744, a called terminal lookup unit 745, a call response signal acquisition unit 746, and a termination implementation unit 747. The connections between the units and their functions are described as follows.

The first video IP telephone terminal 71, the fourth video IP telephone terminal 72, and the fifth video IP telephone terminal 73 are all coupled to the IMS 74. The acquisition unit 741, the implementation unit 743, and the called number information acquisition unit 744 are all coupled to the detection unit 742. The called terminal lookup unit 745 is coupled to the call response signal acquisition unit 746. The termination implementation unit 747 is coupled to the call response signal acquisition unit 746.

The called number information acquisition unit 744 is adapted to acquire the called telephone number transmitted by the first video IP telephone terminal 71. After the acquisition unit 741 acquires an off-hook Notify signal transmitted from the first video IP telephone terminal 71, when the detection unit 742 detects that the second video IP telephone terminal having the same phone number as the first video IP telephone terminal 71 is in the call session idle state, the IMS 74 transmits a called number dialed waiting tone to the first video IP telephone terminal 71. Afterwards, the called telephone number transmitted from the first video IP telephone terminal 71 is acquired.

After the called number information acquisition unit 744 acquires the called telephone number, the called terminal lookup unit 745 detects whether any one of the fourth video IP telephone terminal 72 and the fifth video IP telephone terminal 73 using the same called telephone number is in the communication state. When the detection result indicates that both the fourth video IP telephone terminal 72 and the fifth video IP telephone terminal 73 are in the idle state, the IMS transmits ringing signals to the fourth video IP telephone terminal 72 and the fifth video IP telephone terminal 73 so as to prompt them to respond to the call session request from the first video IP telephone terminal 71. Meanwhile, a call session waiting tone may also be transmitted to the first video IP telephone terminal 71 so as to prompt it to wait for the call session response from the called party.

The call response signal acquisition unit 747 is adapted to receive an off-hook signal from the fourth video IP telephone terminal 72/the fifth video IP telephone terminal 73.

The termination implementation unit 747 is adapted to terminate the transmission of the call response request signals such as the ringing to the called party when the call response signal acquisition unit 746 receives the off-hook signal. At this time, the IMS 74 may also establish a call session connection between the first video IP telephone terminal 71 and the called telephone that responds. The subsequent functions for the combined terminals to join/quit the call session may be same as those described with respect to FIG.5 and FIG.6.

It is to be noted that the above video IP telephone terminals using the same called telephone number are not limited to the fourth video IP telephone terminal and the fifth video IP telephone terminal, but may include more terminals having the same called telephone number.

Descriptions will be made below to an IP telephone terminal according to embodiments of the present invention with reference to the accompanying drawings.

FIG.8 is a diagram showing the main configuration of an IP telephone terminal according to an embodiment of the present invention. As illustrated, the configuration mainly includes components as follows.

An acquisition unit 81 is adapted to acquire a call session initiation/termination signal from a second IP telephone terminal using the same telephone number as the present terminal. It is to be noted that IP telephone terminals using the same telephone number are not limited to the present terminal and the above mentioned second IP telephone terminal, but may include many other terminals using the telephone number. The call session initiation signal may be an off-hook signal, and the termination signal may be an on-hook signal. Meanwhile, the telephone number, the IP address information or the like of the terminal combination may be preset in the present terminal.

A detection unit 82 is adapted to detect based on the call session initiation/termination signal whether the present terminal is communicating with the third IP telephone terminal. If the detection result is positive, control information is outputted for controlling exchange of a set of call session information for the terminal and the second IP telephone terminal and the call session information for the third IP telephone terminal.

The call session operation signal may be an off-hook signal, an on-hook signal or a key-pressing signal having the function of indicating establishment/clearance of a call connection. As the signal differs, the function of the detection unit 82 may be defined in two cases.

First, when the acquisition unit 81 acquires a call session initiation signal (for example, an off-hook signal), the detection unit 82 is triggered to operate. When the detection unit 82 detects that the present terminal is communicating with the third IP telephone terminal, control information is outputted for initiating the exchange of a set of call session information for the terminal and the second IP telephone terminal and call session information for the third IP telephone terminal.

Second, when the acquisition unit 81 acquires a call session termination signal (for example, an on-hook signal), the detection unit 82 is also triggered to operate. When the detection unit 82 detects that the present terminal is communicating with the third IP telephone terminal, control information is outputted for terminating the exchange of a set of call session information for the terminal and the second IP telephone terminal and call session information for the third IP telephone terminal.

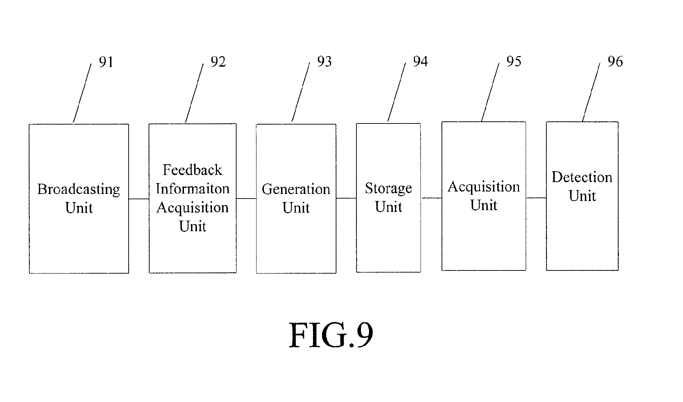

FIG.9 is a diagram schematically showing a first embodiment of the IP telephone terminal according to the present invention. Referring to the figure, the IP telephone terminal includes a broadcasting unit 91, a feedback information acquisition unit 92, a generation unit 93, a storage unit 94, an acquisition unit 95, and a detection unit 96. The connections between the units and their respective functions are described as follows.

The broadcasting unit 91 is coupled to the feedback information acquisition unit 92. The feedback information acquisition unit 92 is coupled to the generation unit 93. The generation unit 93 is coupled to the storage unit 94. The storage unit 94 is coupled to the acquisition unit 95. The acquisition unit 95 is coupled to the detection unit 96.

The broadcasting unit 91 is adapted to broadcast the broadcast information carrying the telephone number and IP information identification to IP telephone terminals within the same network segment.

The feedback information acquisition unit 92 is adapted to acquire feedback information indicating IP telephone terminals using the same telephone number.

The generation unit 93 is adapted to generate a database in the storage unit 94 based on the feedback information.

The storage unit 94 is adapted to store a database of registration information for each of IP telephone terminals using the same telephone number as the present terminal. The registration information may include the IP address information of the IP telephone terminals, the identification information of the IP telephone terminals, the call session restriction information, etc. It may be used to establish a call session connection by looking up the IP address information, or may be used to detect whether the connection path of an IP telephone terminal is busy/idle via the IP telephone terminal identification information, or may be used to restrict the terminal combination processing via the call session restriction information. The storage media may have different performances and different capacities based on different requirements.

The functions of other units may be the same as the functions of the corresponding units described with respect to FIG.8.

Each of the IP telephone terminals has the function of receiving and broadcasting the broadcast information. By using the telephone number to identify whether IP telephone terminals use the same telephone number and by using the IP information identification to identify different IP telephone terminals, the feedback information may be obtained for indicating the IP telephone terminal using the same telephone number, and thus the database may be generated.

According to the embodiments of the present invention, a method, a system and a terminal for call session are provided. When a first IP telephone terminal transmits a call session operation signal, if a second IP telephone terminal using the same telephone number as the first IP telephone terminal is communicating with a third IP telephone terminal, the first IP telephone terminal, the second IP telephone terminal and the third IP telephone terminal may exchange information. With this scheme, a definition is added for implementation of the terminal combination function of IP telephone terminals in an IP telephone system so that an IP telephone terminal may use the same telephone number to join or quit a call session of the terminal combination, and accordingly the user satisfaction may be enhanced. Similarly, the IP telephone system and the IP telephone terminal provided in the embodiments of the present invention or any technical solution using a scheme similar to the above described call session method, may achieve the above technical effects as well.

Those skilled in the art will appreciate that the modules or steps in the above embodiments of the present invention may be implemented in a general purpose computing device. They may be integrated into a single computing device or distributed across a network of multiple computing devices. Optionally, they may be implemented in program codes which may be executed by the computing device so that they may be stored in a storage device and executed by the computing device, or they be manufactured into various Integrated Circuit (IC) modules respectively, or some of the modules or steps may be implemented in a single IC module. In this manner, the invention is not limited to any combination of hardware and software. It will be understood that variations of the specific implementations are obvious to those skilled in the art without departing from the scope of the invention.

The invention has been described above with reference to preferred embodiments, which are not used to limit the scope of the invention. All equivalent changes made in accordance with the claims of the invention still fall within the scope of the invention.

## Claims

1. A method for call session, comprising:
receiving a call session operation signal from a first IP telephone terminal;
detecting based on the call session operation signal whether a second IP telephone terminal using the same telephone number as the first IP telephone terminal is communicating with a third IP telephone terminal; and
controlling the first IP telephone terminal and the second IP telephone terminal to exchange information with the third IP telephone terminal when detecting that the second IP telephone terminal is communicating with the third IP telephone terminal.

2. The method for call session according to claim 1, further comprising:
generating a notification signal for notifying receipt of a next call session operation signal when detecting that the second IP telephone terminal is not communicating with the third IP telephone terminal.

3. The method for call session according to claim 1, wherein the session operation signal is a call session initiation signal, and wherein the step of controlling the first IP telephone terminal and the second IP telephone terminal to exchange information with the third IP telephone terminal comprises:
establishing call session connections between the first IP telephone terminal, the second IP telephone terminal and the third IP telephone terminal when the second IP telephone terminal using the same telephone number as the first IP telephone terminal is communicating with the third IP telephone terminal; and
mixing the call session information for the first IP telephone terminal and the call session information for the second IP telephone terminal, transmitting the mixed call session information to the third IP telephone terminal, and controlling the call session information sent from the third IP telephone terminal to be transmitted to the first IP telephone terminal and the second IP telephone terminal respectively through their respective call session connections.

4. The method for call session according to claim 1, wherein the call session operation signal is a call session termination signal, and wherein the step of controlling the first IP telephone terminal and the second IP telephone terminal to exchange information with the third IP telephone terminal further comprises:
terminating call session connections between the first IP telephone terminal and the second IP telephone terminal and between the first IP telephone terminal and the third IP telephone terminal and updating the call session connection between the second IP telephone terminal and the third IP telephone terminal when the second IP telephone terminal having the same telephone number as the first IP telephone terminal is communicating with the third IP telephone terminal.

5. A telephone system, comprising a call session control device adapted to control a call session between IP telephone terminals, wherein:
the call session control device is adapted to receive a call session operation signal from a first IP telephone terminal, to detect based on the call session operation signal whether a second IP telephone terminal using the same telephone number as the first IP telephone terminal is communicating with a third IP telephone terminal, and to control the first IP telephone terminal and the second IP telephone terminal to exchange information with the third IP telephone terminal when detecting that the second IP telephone terminal is communicating with the third IP telephone terminal.

6. The system according to claim 5, wherein the call session control device comprises:
an acquisition unit, adapted to acquire the call session operation signal from the first IP telephone terminal;
a detection unit, adapted to detect based on the call session operation signal whether the second IP telephone terminal using the same telephone number as the first IP telephone terminal is communicating with the third IP telephone terminal, to output control information for controlling the first IP telephone terminal and the second IP telephone terminal to exchange information with the third IP telephone terminal when detecting that the second IP telephone terminal is communicating with the third IP telephone terminal, and to generate a notification signal for notifying receipt of a next call session operation signal when detecting that the second IP telephone terminal is not communicating with the third IP telephone terminal; and
an implementation unit, adapted to control the first IP telephone terminal and the second IP telephone terminal to exchange information with the third IP telephone terminal based on the control information.

7. The system according to claim 5, wherein the call session operation signal is a call session initiation signal, and wherein the call session control device further comprises:
a called number information acquisition unit, adapted to acquire the called telephone number information transmitted from the first IP telephone terminal when the detection result of the detection unit is negative;
a called terminal lookup unit, adapted to detect based on the called telephone number information whether each called IP telephone terminal using the called telephone number is communicating, and to transmit a call response request signal to the each called IP telephone terminal when the detection result is negative;
a call response signal acquisition unit, adapted to acquire a call response signal transmitted from the called IP telephone terminal; and
a termination implementation unit, adapted to terminate transmission of the call response request signal to the called IP telephone terminal based on the call response signal.

8. The system according to claim 6 or 7, wherein the call session operation signal is a call session initiation signal, and wherein the implementation unit comprises:
a configuration unit, adapted to establish call session connections between the first IP telephone terminal, the second IP telephone terminal and the third IP telephone terminal based on the control information;
a reception unit, adapted to receive the call session information transmitted over the call session connections from the first IP telephone terminal, the second IP telephone terminal and the third IP telephone terminal; and
a transmission unit, adapted to mix the call session information for the first IP telephone terminal and the call session information for the second IP telephone terminal, to transmit the mixed call session information to the third IP telephone terminal, and to control the call session information sent from the third IP telephone terminal to be transmitted to the first IP telephone terminal and the second IP telephone terminal respectively through their respective call session connections.

9. The system according to claim 6, wherein the call session operation signal is a call session termination signal, and wherein the implementation unit comprises:
a release unit, adapted to terminate call session connections between the first IP telephone terminal and the second IP telephone terminal and between the first IP telephone terminal and the third IP telephone terminal, and to update the call session connection between the second IP telephone terminal and the third IP telephone terminal based on the control information; and
a release control unit, adapted to control the operation of the release unit.

10. A telephone terminal, comprising:
an acquisition unit, adapted to receive a call session operation signal from a second IP telephone terminal using the same telephone number as the terminal; and
a detection unit, adapted to detect based on the call session operation signal whether the terminal is communicating with a third IP telephone terminal, and to output control information for controlling exchange of a set of call session information for the terminal and the second IP telephone terminal and call session information for the third IP telephone terminal.

11. The terminal according to claim 10, wherein the IP telephone terminal further comprises:
a storage unit, adapted to store a database of registration information for each of IP telephone terminals using the same telephone number as the terminal; and wherein the acquisition unit acquires a telephone terminal using the same telephone number as the terminal locally from the storage unit.

12. The terminal according to claim 10, wherein the IP telephone terminal further comprises:
a broadcasting unit, adapted to broadcast the broadcast information carrying a telephone number and an IP information identification to IP telephone terminals within the same network segment;
a feedback information acquisition unit, adapted to acquire feedback information indicating an IP telephone terminal using the same telephone number; and
a generation unit, adapted to generate the database based on the feedback information.
